# EUROPÄISCHE PATENTSCHRIFT

(11) **EP 1 674 771 B1**
(45) Veröffentlichungstag und Bekanntmachung des Hinweises auf die Patenterteilung: **12.05.2010**
(21) Anmeldenummer: 04030733.2
(22) Anmeldetag: 23.12.2004
(51) Int. Cl.: F16J 15/16, F16J 15/44

(54) **Anordnung zur Abdichtung eines Spaltes zwischen einem ersten Bauteil und einem zweiten Bauteil**
Arrangement for sealing a gap bewteen a first and a second element
Dispositif d'étanchéité entre un premier et un second élément

(43) Veröffentlichungstag der Anmeldung: 28.06.2006
(73) Patentinhaber: SIEMENS AKTIENGESELLSCHAFT, 80333 München (DE)
(72) Erfinder: Mikulec, Vinko, 47051 Duisburg (DE)

(56) Entgegenhaltungen:
- WO-A-2004/053365
- DE-A- 4 107 586
- DE-A1- 2 637 028
- US-A- 2 119 033
- US-A1- 2001 007 632
- US-A1- 2004 100 035

## Beschreibung

Die Erfindung betrifft eine Wellendichtungsanordnung mit ersten und zweiten Bauteilen für eine Strömungsmaschine zur Abdichtung eines Spaltes zwischen einem ersten Bauteil und einem zweiten Bauteil, wobei zwischen einer Dichtfläche des ersten Bauteils und einer Dichtfläche des zweiten Bauteils ein Dichtelement angeordnet ist, wobei das erste Bauteil als ein um eine Rotationsachse drehbar gelagerter rotationssymmetrischer Rotor ausgebildet ist und das zweite Bauteil als ein um die Rotationsachse rotationssymmetrisch ausgebildeter Stator ausgebildet ist, wobei Mittel vorgesehen sind, die zum Verschieben des Dichtelements zum ersten Bauteil hin ausgebildet sind, wobei die Dichtfläche des zweiten Bauteils als Führungsfläche für das Dichtelement beim Verschieben zum ersten Bauteil hin angeordnet ist,
wobei das Mittel ein bewegbares Druckelement umfasst, das derart ausgebildet ist, dass dessen Verschiebung zu einer Verschiebung des Dichtelements führt und das Druckelement mittels einer eine Feder aufweisenden Schraube zur federnden Lagerung des Druckelements am zweiten Bauteil angeordnet ist.

Bekannte Wellendichtungen sind z. B. Labyrinthdichtungen. Eine Leckageströmung wird hierbei durch so genannte Dichtlippen abgebremst. Derartige Dichtungen werden in verschiedenen Strömungsmaschinen eingesetzt.

Unter der Sammelbezeichnung "Strömungsmaschine" werden Wasserturbinen, Dampf- und Gasturbinen, Windräder, Kreiselpumpen und Kreiselverdichter sowie Propeller zusammengefasst. Allen diesen Maschinen ist gemeinsam, dass sie dem Zweck dienen, einem Fluid Energie zu entziehen, um damit eine andere Maschine anzutreiben oder umgekehrt einem Fluid Energie zuzuführen, um dessen Druck zu erhöhen. Als Fluid sollen sowohl Flüssigkeiten als auch Gase verstanden werden, die strömende Bewegungen ausführen können.

Wie bei anderen thermischen Strömungsmaschinen werden die Wellendichtungen durch das Gehäuse sowie die inneren Dichtstellen der Maschinen üblicherweise mittels Labyrinthdichtungen abgedichtet. Bei brennbaren, giftigen oder kostspieligen Gasen wird aber ein vollständig gasdichter Abschluss gegenüber der Umgebung verlangt, der mit den Labyrinthdichtungen nicht erreichbar ist.

Abhilfe können hier Gleitringdichtungen oder Dichtungen mit einer Flüssigkeitssperre schaffen. Bei solchen Anordnungen erfolgt die Abdichtung durch einen Flüssigkeitsfilm zwischen einer Welle und der Bohrung von Dichtringen, die gegen Drehung gesichert sind, sich aber in radialer Richtung bewegen können, damit sie den Verlagerungen der Welle gegenüber dem Gehäuse folgen können. Die Sperrflüssigkeit wird zwischen zwei Ringen zugeführt und tritt gas- und atmosphäreseitig aus. Als Sperrflüssigkeiten kommen in erster Linie Öle und Wasser in Frage. Bei der Auswahl ist zu berücksichtigen, welche Veränderungen die Flüssigkeit durch gelöste Gase erfahren kann, wie Schaumbildung, Viskositätsänderungen oder chemische Reaktionen.

Selbstverständlich ist die Dichtwirkung umso besser, je enger der Spalt zwischen dem Rotor und dem Stator ist. Es ist gewünscht, dass solche Dichtungsanordnungen derart ausgebildet sind, dass eine leichte Montierbarkeit der gesamten Strömungsmaschine erfolgen kann. Des Weiteren muss gewährleistet sein, dass der Rotor im Stator unter allen Betriebsbedingungen drehbar ist. Eine Ausprägung eines unerwünschten Spalts zwischen einem Stator und einem Rotor wird beeinflusst durch Fliehkräfte und Druckdifferenzen sowie unterschiedliche Ausdehnungen von Rotor und Stator aufgrund hoher Temperaturschwankungen.

Bekannt sind Dichtungen, bei denen eine Dichtwirkung mittels Sperrgas erreicht wird. Für eine gute Dichtwirkung werden unter Umständen hohe Sperrgasverbräuche in Kauf genommen. Des Weiteren sind Dichtungen bekannt, bei denen ein Kontakt zwischen dem Stator und dem Rotor erfolgt. Bekannt sind hierbei die so genannten Bürstendichtungen, deren Dichtwirkung auch bei verändernden Spaltbreiten gegeben ist.

Aus dem US-Patent US 2,119,033 ist eine Stopfbuchse bekannt, wie sie zur Abdichtung von Drehschäften für Ventile benutzt wird. Eine ebenfalls statische Abbildung ist aus der deutschen Offenlegungsschrift DE 26 37 028 bekannt. Aus der Offenlegungsschrift US 2001/0007632 A1 ist es bekannt, auswechselbare Verschleißelemente zur Minimierung des Bewegungsspaltes zwischen Rotor und Stator zu schaffen, wobei diese Verschleißelemente mittels schräger Anlageflächen axial mit radialer Wirkung verspannt sind. Aus der Offenlegungsschrift US 2004/0100035 ist eine radial nach außen nachgebende Wellendichtungsanordnung bekannt, welche im Falle eines Kontaktes zwischen dem Rotor und dem Stator das Schadenspotential minimiert. Keine der beschriebenen Lösungen zeigt auf, wie ein Dichtspalt einer Wellendichtungsanordnung über weite Temperaturbereiche nahezu konstant gehalten werden kann.

Aus der DE 41 07 586 C1 ist bereits eine Abdichtungsanordnung für eine Knetmaschine bekannt, welche eine elastisch vorgespannte Stopfbuchse aus flexiblen Polytetrafluorethylenringen vorsieht.

Aufgabe der Erfindung ist es, eine Anordnung zur Abdichtung eines Spaltes zwischen einem ersten Bauteil und einem zweiten Bauteil anzugeben, bei dem der Spalt für alle Betriebsbedingungen möglichst gering ist.

Die Aufgabe wird gelöst durch eine Anordnung zur Abdichtung eines Spaltes der eingangs genannten Art mit den zusätzlichen Merkmalen des kennzeichnenden Teils des Anspruchs 1.

Der Vorteil der Erfindung ist unter anderem, dass der Spalt zwischen dem ersten Bauteil und dem zweiten Bauteil über einen großen Temperaturbereich im Wesentlichen konstant gehalten werden kann. Bei größer werdenden Temperaturen dehnen sich das erste Bauteil und das zweite Bauteil oft unterschiedlich stark aus. Ein größer werdender Spalt wäre die Folge davon. Mit der Erfindung wird ein Dichtelement eingesetzt, wodurch der Spalt durch ein Verschieben eines Dichtelements wieder geringer wird.

Ein Vorteil ist unter anderem, dass eine in einer radialen Richtung erfolgenden Wärmeausdehnung in eine axiale Bewegung umgesetzt wird.

Erfindungsgemäß umfasst das Mittel ein bewegbares Druckelement, das derart ausgebildet ist, dass dessen Verschiebung zu einer Verschiebung des Dichtelements führt. Eine durch Temperaturausdehnung erfolgte Bewegung des ersten Bauteils führt hierbei zu einer Bewegung des bewegbaren Druckelements. Die Bewegung ist hierbei derart, dass diese zu einer Bewegung bzw. Verschiebung des Dichtelements in Richtung des Spaltes führt.

Dadurch hat man ein geeignetes und gleichzeitig einfaches Mittel einer temperaturbedingten Bewegung entgegenzuwirken.

In einer vorteilhaften Weiterbildung weist das Druckelement eine erste gegenüber einer Bewegungsrichtung des Dichtelements geneigte Fläche auf, die an einer zweiten geneigten Fläche des Dichtelements anliegt.

Eine in einer Bewegungsrichtung führenden Verschiebung des Druckelements wird sozusagen über eine gemeinsame geneigte Fläche in eine andere Bewegungsrichtung umlenkt. Die geneigten Flächen müssen hierbei einen geeigneten Winkel aufweisen.

Dadurch ist eine einfache Möglichkeit angegeben, über geeignete Flächen und einer gewissen Gleitreibung Bewegungen in einer Richtung in eine Bewegung in eine andere Richtung umzusetzen.

In der Erfindung ist das Druckmittel mittels einer eine Feder aufweisenden Schraube zur federnden Lagerung des Dichtelements am zweiten Bauteil angeordnet.

Mit dieser Maßnahme ist es möglich, das Druckelement möglichst von äußeren Kräften zu entlasten. In Folge ändernder Temperaturen ändert sich der Spalt zwischen dem ersten und zweiten Bauteil. Eine Vergrößerung des Spalts führt zu einer Bewegung des Druckelements in Folge einer Federkraft. Die Bewegung des Druckelements führt schließlich zu einer Bewegung des Dichtelements in Richtung des Spalts.

Dadurch ist eine einfache Möglichkeit gegeben, über eine einfache Federkraft eine Bewegung in einer Bewegungsrichtung zu realisieren.

In einer weiteren vorteilhaften Ausbildung liegt die Bewegungsrichtung des Druckelements im Wesentlichen senkrecht zur Bewegungsrichtung des Dichtelements.

Der Vorteil hierbei ist, dass durch eine nahezu orthogonale Umsetzung von Bewegungsrichtungen Bauraum gespart wird.

Erfindungsgemäß ist das Dichtelement in Umfangsrichtung aus mehreren um den Rotor angeordneten Einzeldichtelementen ausgebildet.

Dadurch wird die Möglichkeit geschaffen, entlang der Rotorachse eine größere Spaltbreite abzudecken. Ein sich vergrößernder Spalt führt zu einer vergrößerten Umfangslänge des Dichtelementes. Eine Verkleinerung des Spaltes führt zu einer Verkleinerung des Umfangs des Dichtelements. Ein als Ring ausgebildetes Dichtelement hätte danach einen minimalen Durchmesser. Durch die Aufteilung des Dichtelements in Einzeldichtelemente, die um den Rotor angeordnet sind, ist es möglich, einen variablen Umfang bereitzustellen.

In einer weiteren vorteilhaften Ausbildung ist das Druckelement in Form eines Ringes um den Rotor ausgebildet.

Diese Anordnung eignet sich für Rotoren, bei denen ein Ring um den Rotor leicht montiert werden kann.

In einer weiteren Ausbildung wird das Druckelement in zumindest zwei Teilringe ausgebildet.

Diese Anordnung eignet sich für Strömungsmaschinen, bei denen nicht ohne weiteres ein Ring um den Rotor montiert werden kann. Durch die Aufteilung des Gesamtringes in zumindest zwei Teilringe können diese leicht montiert werden.

In einer vorteilhaften Ausbildung weisen das Druckelement und das Dichtelement jeweils eine konische Fläche auf, die derart ausgebildet sind, dass eine Verschiebung des Druckelements eine Verschiebung des Dichtelements bewirkt.

Dadurch ist ein besonders einfaches Mittel gegeben, eine Umsetzung von Bewegungsrichtungen zu realisieren. Die Umsetzung hierbei erfolgt über rein mechanische Kräfte, die zudem wenig Bauraum benötigen.

In einer vorteilhaften Ausbildung weist der Stator und das Dichtelement eine der oben erwähnten konischen Fläche, z. B. gegenüberliegende weitere konische Fläche auf, die derart ausgebildet ist, dass eine Verschiebung des Dichtelements ein Anliegen an dem Stator bewirkt.

Dadurch erreicht man den Vorteil, dass durch bestimmte Auswahl der Winkel der konischen Flächen das Dichtelement zentriert wird. Das bedeutet, dass ein Verkippen des Dichtelements, was zu einem sich ändernden Spalt führen würde, vermieden wird.

Die Verwendung der Anordnung zur Abdichtung eines Spaltes wird vorteilhafterweise in einer Strömungsmaschine verwendet.

Nachstehend wird die Erfindung anhand von Ausführungsbeispielen näher erläutert, die in schematischer Weise in der Zeichnung dargestellt sind. Für gleiche und funktionsidentische Bauteile werden durchgehend dieselben Bezugszeichen verwendet.

Dabei zeigen:
- Figur 1: einen Schnitt durch eine Anordnung zur Abdichtung eines Spaltes;
- Figur 2: eine Seitenansicht der Anordnung.

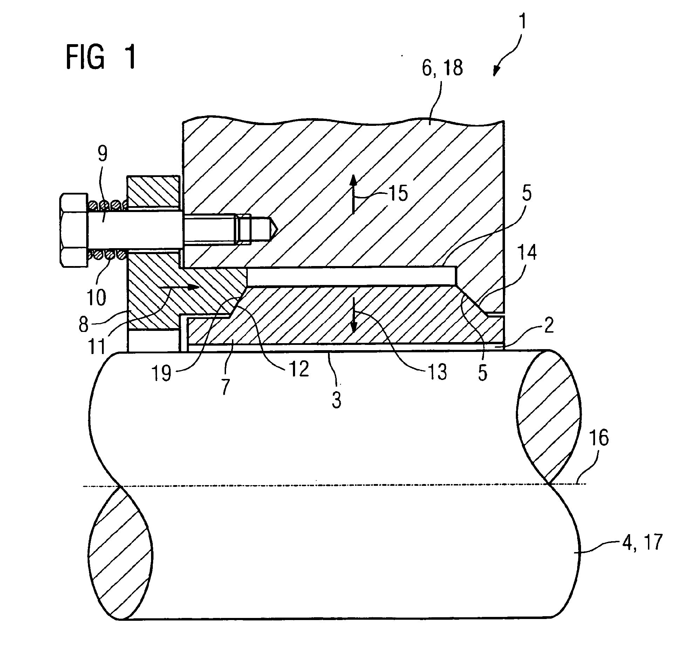

In Figur 1 ist ein Schnitt durch eine Anordnung zur Abdichtung eines Spaltes 2 dargestellt. Zwischen einer Dichtfläche 3 eines ersten Bauteils 4 und einer Dichtfläche 5 eines zweiten Bauteils 6 ist ein Dichtelement 7 angeordnet.

Ein Druckelement 8 wird über eine Schraube 9 und eine Feder 10 federnd an dem zweiten Bauteil 6 gelagert. Die Feder 10 bewirkt eine Kraft in einer ersten Bewegungsrichtung 11. Eine Bewegung des Druckelements 8 würde über eine geneigte Fläche 12 eine weitere Kraft auf das Dichtelement 7 ausüben. Die Bewegung des Druckelements 8 würde schließlich zu einer Verschiebung des Dichtelements 7 in einer weiteren Bewegungsrichtung 13 führen.

Zwischen dem zweiten Bauteil 6 und dem Dichtelement 7 ist eine weitere geneigte Fläche angeordnet. Durch Auswahl geeigneter Winkel für die erste geneigte Fläche und der weiteren geneigten Fläche 14 erfolgt eine nicht verkippende Bewegung des Dichtelements 7 in Richtung des Spaltes 2.

Im thermodynamischen Gleichgewicht ist die Federkraft der Feder 10 die erste schräge Fläche 12 und die weitere schräge Fläche 14 derart gewählt, dass ein möglichst geringer Spalt 2 sich ausbildet. Bei einer Erhöhung der Temperatur dehnt sich das zweite Bauteil 6 in einer Ausdehnungsrichtung 15 aus. Bei einer starren bzw. festen Anordnung des Dichtelements 7 an dem zweiten Bauteil 6 würde dies zu einer Vergrößerung des Spaltes 2 führen. Eine Bewegung des zweiten Bauteils 6 in der Ausdehnungsrichtung 15 führt zu einer Bewegung des Druckelements 8 infolge der Federkraft der Feder 10 in der ersten Bewegungsrichtung 11. Diese Verschiebung des Druckelements 8 ist derart, dass dessen Verschiebung zu einer Verschiebung des Dichtelements 7 in Richtung 13 führt.

Die erste Bewegungsrichtung 12 und die Richtung 13 sind hierbei im Wesentlichen senkrecht zueinander.

Das erste Bauteil 4 kann als ein um eine Rotationsachse 16 drehbar gelagerter rotationssymmetrischer Rotor 17 ausgebildet sein. Das zweite Bauteil 6 kann als ein um die Rotationsachse 16 rotationssymmetrisch ausgebildeter Stator 18 sein.

Der Spalt 2 kann durch Auswahl von geeigneten Materialien für das Dichtelement 7, das Druckelement 8 und des zweiten Bauteils beeinflusst werden. Die Größe des Spaltes 2 ist somit abhängig von den herrschenden Betriebszuständen.

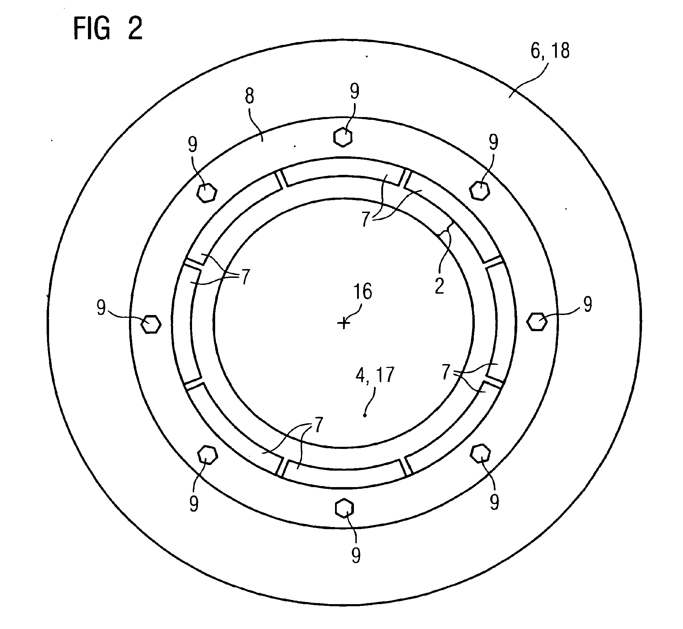

In Figur 2 ist eine Seitenansicht der Anordnung zur Abdichtung eines Spaltes zwischen einem Rotor und einem Stator dargestellt. In der in Figur 2 dargestellten Ausführungsform ist das Druckelement in Form eines Ringes um den Rotor 17 ausgebildet. Denkbar ist eine Ausbildung des Druckelementes 8 auch in Form von zwei Teilringen.

Das Dichtelement 7 ist in der in Figur 2 dargestellten Ausführungsform in mehrere, insgesamt acht Einzeldichtelemente 7 aufgeteilt.

In dieser Ausführungsform sind das Druckelement 8 und das Dichtelement 7 derart ausgebildet, dass sie jeweils eine konische Fläche aufweisen, wobei eine Verschiebung des Druckelementes 8 eine Verschiebung des Dichtelementes 7 erwirkt.

Des Weiteren weist diese Ausführungsform der Stator 18 und das Dichtelement 7 eine weitere konische Fläche auf, die derart ausgebildet ist, dass eine Verschiebung des Dichtelements 7 ein Anliegen an dem Stator 18 erwirkt.

## Patentansprüche

1. Wellendichtungsanordnung (1)mit ersten und zweiten Bauteilen (4, 6) für eine Strömungsmaschine zur Abdichtung eines Spaltes (2) zwischen einem ersten Bauteil (4) und einem zweiten Bauteil (6),
wobei zwischen einer Dichtfläche (3) des ersten Bauteils (4) und einer Dichtfläche (5) des zweiten Bauteils (6) ein Dichtelement (7) angeordnet ist,
wobei das erste Bauteil (4) als ein um eine Rotationsachse (16) drehbar gelagerter rotationssymmetrischer Rotor (17) ausgebildet ist und
das zweite Bauteil (6) als ein um die Rotationsachse (16) rotationssymmetrisch ausgebildeter Stator (18) ist,
wobei Mittel (8, 9, 10) vorgesehen sind, die zum Verschieben des Dichtelements (7) zum ersten Bauteil (4) hin ausgebildet sind,
wobei die Dichtfläche (5) des zweiten Bauteils (6) als Führungsfläche für das Dichtelement (7) beim Verschieben zum ersten Bauteil (4) hin angeordnet ist, wobei das Mittel (8, 9, 10) ein bewegbares Druckelement (8) umfasst,
das derart ausgebildet ist, dass dessen Verschiebung zu einer Verschiebung des Dichtelements (7) führt und das Druckelement (8) mittels einer eine Feder (10) aufweisenden Schraube (9) zur federnden Lagerung des Druckelements (8) am zweiten Bauteil (6) angeordnet ist,
**dadurch gekennzeichnet, dass**
das Dichtelement (7) in Umfangsrichtung aus mehreren um den Rotor (17) angeordneten Einzeldichtelementen (7) ausgebildet ist.

2. Wellendichtungsanordnung (1) nach Anspruch 1,
**dadurch gekennzeichnet, dass**
das Druckelement (8) eine erste gegenüber einer Bewegungsrichtung (11) des Dichtelements (7) geneigte Fläche (12) aufweist, die an einer zweiten geneigten Fläche (19) des Dichtelements (7) anliegt.

3. Wellendichtungsanordnung (1) nach Anspruch 1 oder 2,
**dadurch gekennzeichnet, dass**
die Bewegungsrichtung (11) des Druckelements (8) im Wesentlichen senkrecht zur Bewegungsrichtung (13) des Dichtelements (7) liegt.

4. Wellendichtungsanordnung (1) nach Anspruch 1,
**dadurch gekennzeichnet, dass**
das Druckelement (8) in Form eines Ringes um den Rotor (17) ausgebildet ist.

5. Wellendichtungsanordnung (1) nach Anspruch 1,
**dadurch gekennzeichnet, dass**
das Druckelement (8) zumindest zwei Teilringe umfasst.

6. Wellendichtungsanordnung (1) nach Anspruch 1, 4 oder 5,
**dadurch gekennzeichnet, dass**
das Druckelement (8) und das Dichtelement (7) jeweils eine konische Fläche (12, 19) aufweisen, die derart ausgebildet sind, dass eine Verschiebung des Druckelements (8) eine Verschiebung des Dichtelements (7) erwirkt.

7. Wellendichtungsanordnung (1) nach einem der Ansprüche 1 bis 6,
**dadurch gekennzeichnet, dass**
der Stator (18) und das Dichtelement (7) eine weitere konische Fläche (14) aufweist, die derart ausgebildet ist, dass eine Verschiebung des Dichtelements (7) ein Anliegen an dem Stator (18) erwirkt.

## Claims

1. Shaft seal arrangement (1) having first and second components (4, 6) for a turbomachine for sealing of a gap (2) between a first component (4) and a second component (6), a sealing element (7) being arranged between a sealing face (3) of the first component (4) and a sealing face (5) of the second component (6), the first component (4) being designed as a rotationally symmetrical rotor (17) mounted rotatably about an axis of rotation (16), and the second component (6) as a stator (18) designed to be rotationally symmetrical about the axis of rotation (16), means (8, 9, 10) being provided which are designed to displace the sealing element (7) toward the first component (4), the sealing face (5) of the second component (6) being arranged as a guide face for the sealing element (7) during displacement toward the first component (4), the means (8, 9, 10) comprising a movable pressure element (8) which is designed in such a way that its displacement leads to a displacement of the sealing element (7), and the pressure element (8) is arranged on the second component (6) by means of a screw (9) having a spring (10), for the resilient mounting of the pressure element (8),
**characterized in that**
the sealing element (7) is formed from a plurality of individual sealing elements (7) arranged around the rotor (17) in the direction of the circumference.

2. Shaft seal arrangement (1) according to Claim 1,
**characterized in that**
the pressure element (8) has a first face (12) which is inclined with respect to a movement direction (11) of the sealing element (7) and which bears against a second inclined face (19) of the sealing element (7).

3. Shaft seal arrangement (1) according to Claim 1 or 2, **characterized in that** the movement direction (11) of the pressure element (8) lies essentially perpendicularly to the movement direction (13) of the sealing element (7).

4. Shaft seal arrangement (1) according to Claim 1, **characterized in that** the pressure element (8) is designed in the form of a ring around the rotor (17).

5. Shaft seal arrangement (1) according to Claim 1, **characterized in that** the pressure element (8) comprises at least two part rings.

6. Shaft seal arrangement (1) according to Claim 1, 4 or 5, **characterized in that** the pressure element (8) and the sealing element (7) have in each case a conical face (12, 19) designed in such a way that a displacement of the pressure element (8) causes a displacement of the sealing element (7).

7. Shaft seal arrangement (1) according to one of Claims 1 to 6, **characterized in that** the stator (18) and the sealing element (7) have a further conical face (14) designed in such a way that a displacement of the sealing element (7) causes bearing contact against the stator (18).

## Revendications

1. Dispositif ( 1 ) d'étanchéité d'arbre comprenant un premier, un deuxième éléments ( 4, 6 ) pour une turbomachine, pour rendre étanche un intervalle ( 2 ) entre un premier élément ( 4 ) et un deuxième élément ( 6 ),
dans lequel un élément ( 7 ) d'étanchéité est disposé entre une surface ( 3 ) d'étanchéité du premier élément ( 4 ) et une surface ( 5 ) d'étanchéité du deuxième élément ( 6 ),
dans lequel le premier élément ( 1 ) est constitué sous la forme d'un rotor ( 17 ) de révolution monté tournant autour d'un axe ( 16 ) de rotation et
le deuxième élément ( 6 ) est constitué sous la forme d'un stator ( 18 ) de révolution autour de l'axe ( 16 ) de rotation,
dans lequel il est prévu des moyens ( 8, 9, 10 ) qui sont constitués pour déplacer l'élément ( 7 ) d'étanchéité vers le premier élément ( 4 ),
dans lequel la surface ( 5 ) d'étanchéité du deuxième élément ( 6 ) est disposée en tant que surface de guidage de l'élément ( 7 ) d'étanchéité lors du déplacement vers le premier élément ( 4 ),
dans lequel les moyens ( 8, 9, 10 ) comprennent un élément ( 8 ) mobile d'application d'une pression,
qui est constitué de façon à ce que son déplacement provoque un déplacement de l'élément ( 7 ) d'étanchéité et l'élément ( 8 ) appliquant une pression est disposé, au moyen d'une vis
( 9 ) ayant un ressort ( 10 ) pour le montage élastique de l'élément ( 8 ) d'application d'une pression, sur le deuxième élément ( 6 )
**caractérisé en ce que**
l'élément ( 7 ) d'étanchéité est constitué dans la direction périphérique de plusieurs éléments ( 7 ) d'étanchéité individuels disposés autour du rotor ( 17 ).

2. Dispositif ( 1 ) d'étanchéité d'arbre suivant la revendication 1,
**caractérisé en ce que**
l'élément ( 8 ) d'application d'une pression a une première surface ( 12 ) inclinée par rapport à une direction de déplacement de l'élément ( 7 ) d'étanchéité et s'appliquant à une deuxième surface ( 19 ) inclinée de l'élément ( 7 ) d'étanchéité.

3. Dispositif ( 1 ) d'étanchéité d'arbre suivant la revendication 1 ou 2,
**caractérisé en ce que**
la direction ( 11 ) de déplacement de l'élément ( 8 ) d'application d'une pression est sensiblement perpendiculaire à la direction ( 13 ) de déplacement de l'élément ( 7 ) d'étanchéité.

4. Dispositif ( 1 ) d'étanchéité d'arbre suivant la revendication 1,
**caractérisé en ce que**
l'élément ( 8 ) d'application d'une pression est constitué sous la forme d'un anneau autour du rotor ( 17 ).

5. Dispositif ( 1 ) d'étanchéité d'arbre suivant la revendication 1,
**caractérisé en ce que**
l'élément ( 8 ) d'application d'une pression comprend au moins deux sous-anneaux.

6. Dispositif ( 1 ) d'étanchéité d'arbre suivant la revendication 1, 4 ou 5,
**caractérisé en ce que**
l'élément ( 8 ) d'application d'une pression et l'élément ( 7 ) d'étanchéité ont respectivement une surface ( 12, 19 ) conique constituées de façon à ce qu'un déplacement de l'élément ( 8 ) d'application d'une pression provoque un déplacement de l'élément ( 7 ) d'étanchéité.

7. Dispositif ( 1 ) d'étanchéité d'arbre suivant la revendication 1 à 6,
**caractérisé en ce que** le stator ( 18 ) et l'élément ( 7 ) d'étanchéité ont une autre surface ( 14 ) conique qui est constituée de façon à ce qu'un déplacement de l'élément ( 7 ) d'étanchéité provoque une application sur la stator ( 18 ).
